# EUROPÄISCHE PATENTSCHRIFT

(11) **EP 2 787 407 B1**
(45) Veröffentlichungstag und Bekanntmachung des Hinweises auf die Patenterteilung: **21.11.2018**
(21) Anmeldenummer: 14155008.7
(22) Anmeldetag: 13.02.2014
(51) Int. Cl.: G05B 19/042, H04L 12/26, G05B 9/02, H04L 29/14

(54) **Verfahren für einen fehlersicheren Betrieb eines netzwerksfähigen Steuerungssystems**
Method for a failsafe operation of a network-enabled control system
Procédé de fonctionnant à sécurité intégrée d'un système de commande pouvant fonctionner en réseau

(30) Priorität: 03.04.2013 DE 102013005579
(43) Veröffentlichungstag der Anmeldung: 08.10.2014
(73) Patentinhaber: Phoenix Contact GmbH & Co. KG, 32825 Blomberg (DE)
(72) Erfinder: Ruth, Olaf, 32825 Blomberg (DE); Oster, Viktor, 32825 Blomberg (DE); Horn, Steffen, 32825 Blombera (DE)

(56) Entgegenhaltungen:
- DE-A1- 4 446 710
- US-A1- 2004 177 331

## Beschreibung

Die vorliegende Erfindung bezieht sich auf ein Verfahren für einen fehlersicheren Betrieb eines netzwerkfähigen Steuerungssystems. Ein derartiges gattungsgemäßes Steuerungssystem umfasst eine Steuerung, mindestens eine Eingangsbaugruppe, die zwei oder mehr Signaleingänge aufweist, sowie mindestens einen an die Eingangsbaugruppe angeschlossenen Sensor, der mit einem ersten Signaleingang der Eingangsbaugruppe verbunden ist. Dabei dient die Eingangsbaugruppe, welche über ein Kommunikationsnetzwerk an die Steuerung angeschlossen ist, der Aufbereitung und/oder Wandlung der Sensorsignale für eine Datenübertragung über das Kommunikationsnetzwerk an die Steuerung. Ein derartiges Steuerungssystem ist beispielsweise aus der DE 103 25 263 A1 bekannt.

Zur Signalaufbereitung der Sensorsignale weist eine Eingangsbaugruppe elektronische Komponenten beispielsweise zur Glättung, Filterung und/oder Verstärkung der Sensorsignale auf. Zur Signalwandlung der Sensorsignale eines analogen Sensors weist eine Eingangsbaugruppe einen Analog/Digital-Wandler (A/D-Wandler) auf. Darüber hinaus weist eine Eingangsbaugruppe zur Signalwandlung einen Protokollumsetzer auf, der eine Umsetzung der Signale in Bezug auf das jeweilige Kommunikationsprotokoll des Kommunikationsnetzwerkes bewirkt.

Zur Realisierung eines fehlersicheren Betriebs eines netzwerkfähigen Steuerungssystems ist es bekannt, sogenannte sichere Eingangsbaugruppen zum Anschließen der Sensoren zu verwenden. Eine solche sichere Eingangsbaugruppe weist - im Unterschied zu einer herkömmlichen, d.h. nicht sicheren Eingangsbaugruppe - integrierte Diagnosemaßnahmen zur Fehlererkennung auf. Darüber hinaus muß eine sichere Eingangsbaugruppe und die darin verbauten Komponenten besonders spezifizierten Sicherheitsanforderungen (Redundanz, Mehrkanaligkeit etc.) genügen. Aus diesem Grunde ist eine sichere Eingangsbaugruppe im Vergleich zu einer herkömmlichen Eingangsbaugruppe komplexer und teurer.

Aus dem Dokument US 2004/0177331A1 ist ein I/O-Steuerungssystem für eine Fertigungsanlage mit einer Selbstdiagnose bekannt. Dort sind an die Steuerung mehrere Eingangsbaugruppen und mehrere Ausgangsbaugruppen angeschlossen, wobei jede Eingangsbaugruppe genau einen Signaleingang aufweist, der beispielsweise mit einem Sensor verbunden ist, und jede Ausgangsbaugruppe genau einen Signalausgang aufweist, der beispielsweise mit einem Aktor verbunden ist. Im Diagnosebetrieb wird der Signalausgang einer jeden Ausgangsbaugruppe jeweils über einen ersten Schalter mit dem Signaleingang einer korrespondierenden Eingangsbaugruppe verbunden, während die Signaleingänge und Signalausgänge über zweite Schalter von den im Normalbetrieb angeschlossenen Sensoren bzw. Aktoren getrennt werden. Zur Diagnose sendet die Steuerung Diagnosesignale an die Ausgangsbaugruppen, die dann bei geschlossenen ersten Schaltern über die Eingangsbaugruppen an die Steuerung als Rücksignal zurückübertragen werden. Falls in einem der Pfade kein Rücksignal detektiert wird, bedeutet dies, dass entweder ein Kabel nicht angeschlossen ist oder die entsprechende Eingangs- oder Ausgangsbaugruppe defekt ist. Diese Art der Diagnose erfordert jedoch für entsprechend der Anzahl von Eingangs- und Ausgangsbaugruppen eine entsprechende Anzahl von Umschaltern.

Aufgabe der Erfindung ist es, in einfacher Weise einen fehlersicheren Betrieb eines netzwerkfähigen Steuerungssystems unter Verwendung von herkömmlichen, d.h. nicht sicheren, Eingangsbaugruppen zu realisieren.

Diese Aufgabe wird erfindungsgemäß durch ein Verfahren gemäß Patentanspruch 1 gelöst. Die sich daran anschließenden abhängigen Patentansprüche beziehen sich auf vorteilhafte Ausführungsbeispiele der Erfindung.

Erfindungsgemäß wird in dem gattungsgemäßen Steuerungssystem mindestens eine Ausgangsbaugruppe verwendet, die über das Kommunikationsnetzwerk ebenfalls an die Steuerung angeschlossen ist und mindestens einen Signalausgang aufweist. Dabei ist der mindestens eine Signalausgang der Ausgangsbaugruppe mit einem zweiten Signaleingang der Eingangsbaugruppe verbunden. Zur Fehlererkennung überträgt die Steuerung Diagnosesignale über das Kommunikationsnetzwerk an die Ausgangsbaugruppe. Die Ausgangsbaugruppe ist dabei zur Aufbereitung und/oder Wandlung der über das Kommunikationsnetzwerk empfangenen Diagnosesignale in sensorsignalkonforme Signale zur Ausgabe über den Signalausgang an den zweiten Signaleingang der Eingangsbaugruppe ausgebildet ist. Die von der Ausgangsbaugruppe anhand der Diagnosesignale erzeugten und an die Eingangsbaugruppe ausgegebenen Signale werden dann von der Eingangsbaugruppe in wiederum aufbereiteter und/oder gewandelter Form über das Kommunikationsnetzwerk an die Steuerung zurückübertragen. Erfindungsgemäß ist die Steuerung nun dazu ausgebildet, durch Auswertung der gesendeten Diagnosesignale und der daraufhin von der Eingangsbaugruppe zurückübertragenen Signale Fehler innerhalb der Eingangsbaugruppe, der Ausgangsbaugruppe und/oder des Kommunikationsnetzwerkes zu erkennen.

Ein Fehler in der Eingangsbaugruppe, der Ausgangsbaugruppe und/oder des Kommunikationsnetzwerkes würde dazu führen, dass die zurückübertragenen Signale nicht den Signalen entsprechen, die anhand der gesendeten Diagnosesignale zu erwarten sind.

Die Steuerung kann einen erkannten Fehler an eine übergeordnete Steuerung melden oder selbst eine Fehlerreaktion auslösen.

Auf diese Weise kann unter Verwendung von herkömmlichen Eingangsbaugruppen ein fehlersicherer Betrieb eines netzwerkfähigen Steuerungssystems realisiert werden. Der Verzicht auf sicherere Eingangsbaugruppen bedeutet dabei eine erhebliche Kosteneinsparung. Darüber hinaus ist es mit dem erfindungsgemäßen Verfahren möglich, mit herkömmlichen Eingangsbaugruppen aufgebaute Steuerungssysteme in kostengünstiger Weise nachträglich auf einen fehlersicheren Betrieb um- bzw. nachzurüsten.

Beim Einsatz mindestens einer weiteren, zweiten Eingangsbaugruppe, die entsprechend der ersten Eingangsbaugruppe in das erfindungsgemäße Verfahren eingebettet ist, und eines zum ersten Sensor redundanten Sensors, der an die zweite Eingangsbaugruppe angeschlossen ist, kann mit dem erfindungsgemäßen Verfahren auch die Verfügbarkeit des gesamten Steuerungssystems bei einem Fehler in einer Eingangsbaugruppe erhöht werden.

Die Erfindung wird nachstehend anhand von Ausführungsbeispielen und anhand der Figuren näher erläutert. Dabei zeigt:
- Figur 1: ein Blockschaltbild eines Steuerungssystems bestehend aus einer Steuerung, einer Eingangsbaugruppe, einem Sensor, einer Ausgangsbaugruppe und einem Kommunikationsnetzwerk,
- Figur 2: ein Blockschaltbild eines Steuerungssystems wie in Figur 1, jedoch sind hier die Eingangsbaugruppe und die Ausgangsbaugruppe baulich in einer Baueinheit integriert,
- Figur 3: ein Blockschaltbild eines Steuerungssystems wie in Figur 1, wobei jedoch eine weitere, zweite Eingangsbaugruppe mit einem weiteren Sensor vorgesehen ist,
- Figur 4: ein Blockschaltbild eines Steuerungssystems wie in Figur 3, wobei jedoch eine Sicherheits-Steuerung vorgesehen ist, an die Ausgangsbaugruppe ein Aktor und an die 1. Eingangsbaugruppe ein weiterer Sensor angeschlossen ist,
- Figur 5A: den Signalverlauf der Werte für den 1. Signalausgang der Ausgangsbaugruppe sowie den entsprechenden Signalverlauf der Werte für die von der 1. Eingangsbaugruppe zurückübertragenen Signale,
- Figur 5B: den Signalverlauf der Werte für den 2. Signalausgang der Ausgangsbaugruppe sowie den entsprechenden Signalverlauf der Werte für die von der 2. Eingangsbaugruppe zurückübertragenen Signale.

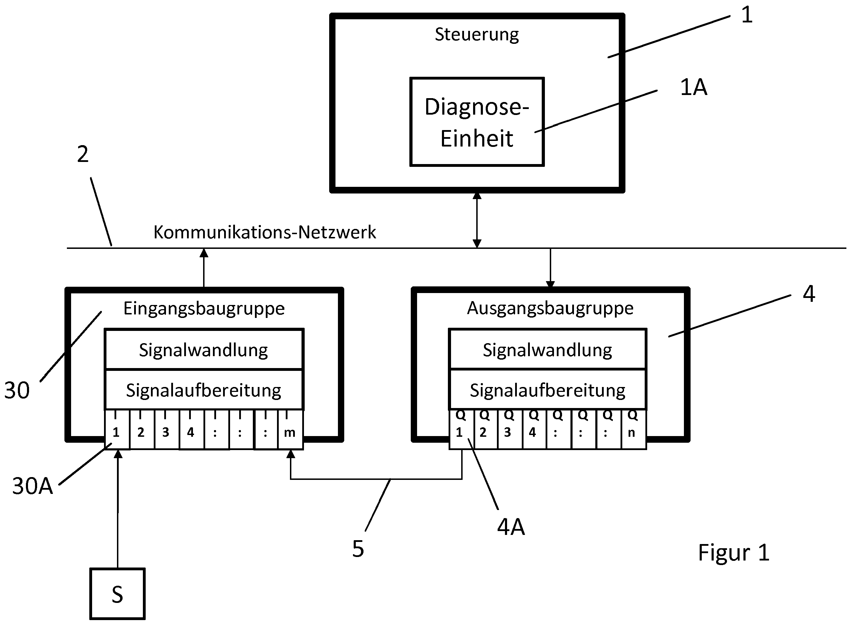

In Figur 1 ist ein Blockschaltbild eines Steuerungssystems dargestellt, dass eine Eingangsbaugruppe (30) mit einem daran angeschlossenen Sensor (S) und eine Ausgangsbaugruppe (4) umfasst. Die Eingangsbaugruppe (30) und die Ausgangsbaugruppe (4) sind über ein Kommunikationsnetzwerk (2) an die Steuerung (1) angeschlossen. Als Kommunikationsnetzwerk können verschiedenste Feldbussysteme eingesetzt werden, z.B. Profibus, Profinet, Interbus, Industrial Ethernet etc. Die Eingangsbaugruppe (30) weist eine Anzahl von m Signaleingängen (30A) auf, wobei der Sensor (S) mit einem ersten Signaleingang (30A) verbunden ist. Grundsätzlich ist für die Ausführung des erfindungsgemäßen Verfahrens eine Eingangsbaugruppe mit mindestens 2 Signaleingängen ausreichend. Die Eingangsbaugruppe (30) dient der Aufbereitung und/oder Wandlung der Sensorsignale für eine Datenübertragung über das Kommunikationsnetzwerk (2) an die Steuerung (1). Die Ausgangsbaugruppe (4) weist eine Anzahl von n Signalausgängen (4A) auf, wobei ein Signalausgang (4A) der Ausgangsbaugruppe (4) mit einem zweiten Signalausgang (30A) der Eingangsbaugruppe (30) über eine niederohmige elektrische Leitung (5), z.B. ein Kabel oder Steckverbindung, verbunden ist. Erfindungsgemäß überträgt die Steuerung (1) Diagnosesignale über das Kommunikationsnetzwerk (2) an die Ausgangsbaugruppe (4), wobei die Ausgangsbaugruppe (4) zur Aufbereitung und/oder Wandlung der über das Kommunikationsnetzwerk (2) empfangenen Diagnosesignale in sensorsignalkonforme Signale zur Ausgabe über ihren Signalausgang (4A) an den zweiten Signaleingang (30A) der Eingangsbaugruppe (30) ausgebildet ist. Sensorsignalkonforme Signale bedeuten dabei Signale, die möglichen Sensorsignalen entsprechen oder zumindest ähnlich oder gleichartig zu diesen sind. Mit anderen Worten ist die Ausgangsbaugruppe (4) in der Lage anhand der gesendeten Diagnosedaten an ihrem Signalausgang (4A) Signale bereitzustellen, die ihrem Typ und ihrem Wertebereich nach dem des an die Eingangsbaugruppe (30) angeschlossenen Sensors (S) entsprechen. Handelt es sich bei dem Sensors (S) bspw. um einen Analogsensor, der als Sensorsignal Spannungswerte in einem Bereich zwischen 0 und 5 Volt ausgibt, so ist die Ausgangsbaugruppe (4) so ausgebildet, dass sie anhand der Diagnosesignale an ihrem Signalausgang ebenfalls Spannungswerte zwischen 0 und 5 Volt zur Verfügung stellt. Diese von der Ausgangsbaugruppe (4) anhand der Diagnosesignale erzeugten und an die Eingangsbaugruppe (30) ausgegebenen Signale werden nun von der Eingangsbaugruppe (30) in wiederum aufbereiteter und/oder gewandelter Form über das Kommunikationsnetzwerk (2) an die Steuerung (1) zurückübertragen. Die Steuerung (1) ist nun ihrerseits dazu ausgebildet, durch Auswertung der gesendeten Diagnosesignale und der daraufhin von der Eingangsbaugruppe (30) zurückübertragenen Signale Fehler innerhalb der Eingangsbaugruppe (30), der Ausgangsbaugruppe (4) und/oder des Kommunikationsnetzwerkes (2) zu erkennen. Die Auswertung erfolgt vorzugsweise durch Vergleich der gesendeten Diagnosesignale mit den von der Eingangsbaugruppe (30) zurückübertragenen Signalen, wobei bei einer Abweichung, die außerhalb einer vorgegebenen Toleranz liegt, vom Vorliegen eines Fehlers ausgegangen wird.

Anhand der Diagnosesignale werden von der Steuerung (1) ihr bekannte Testsignale quasi als Sensorsignale generiert, die dann der Eingangsbaugruppe (30) zugeführt werden. Dabei kann davon ausgegangen werden, dass dann, wenn das bekannte Testsignal die Signalaufbereitung und/oder Signalwandlung der Eingangsbaugruppe (30) ordnungsgemäß durchlaufen hat und die entsprechenden Daten anschließend ordnungsgemäß über das Kommunikationsnetzwerk (2) an die Steuerung (1) übertragen wurden, kein Fehler vorliegt, d.h. auch ein fehlersichere Betrieb des Steuerungssystems hinsichtlich der Erfassung der Signale des eigentlichen Sensors (S) gewährleistet ist, da die eigentlichen Sensorsignale denselben Weg zur Steuerung (1) nehmen wie die geprüften Testsignale, wobei die Testsignale und die eigentlichen Sensorsignale, insbesondere dieselbe Signalaufbereitung und/oder Signalwandlung innerhalb der Eingangsbaugruppe (30) durchlaufen. Die Testsignale und die eigentlichen Sensorsignale sind lediglich über verschiedene Signaleingänge (30A) mit der Eingangsbaugruppe (30) verbunden. Zur Signalaufbereitung der Sensorsignale weist die Eingangsbaugruppe (30) elektronische Komponenten beispielsweise zur Glättung, Filterung und/oder Verstärkung der Sensorsignale auf. Zur Signalwandlung der Sensorsignale weist die Eingangsbaugruppe im Falle eines Analogsensors einen Analog/Digital-Wandler (A/D-Wandler) auf. Darüber hinaus weist eine Eingangsbaugruppe zur Signalwandlung einen Protokollumsetzer auf, der eine Umsetzung der Signale in Bezug auf das jeweilige Kommunikationsprotokoll des Kommunikationsnetzwerkes bewirkt.

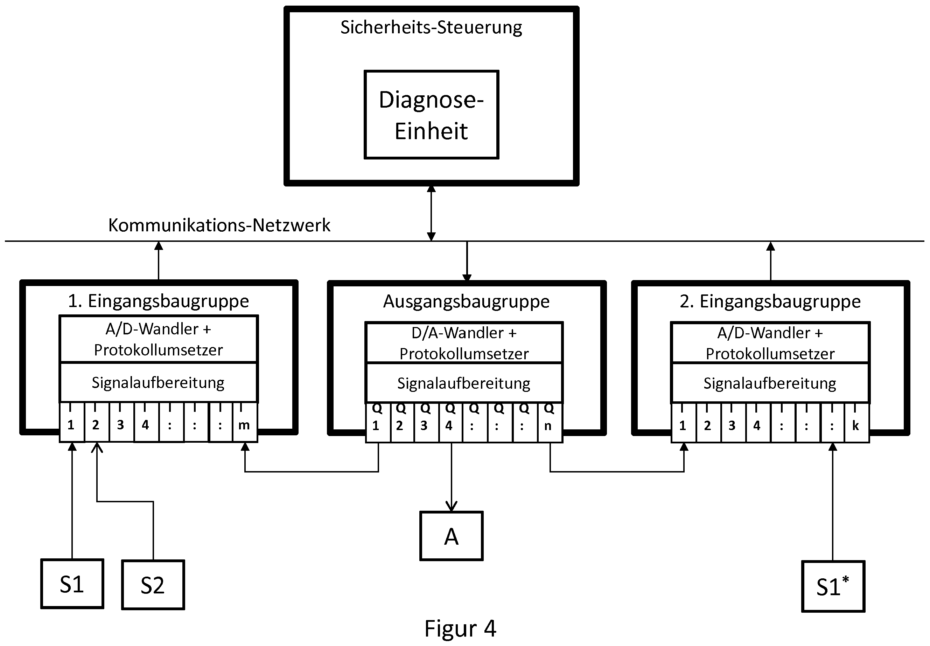

Falls der Sensor (S) ein Analogsensor ist, der analoge Sensorsignale, z.B. Spannungswerte, erzeugt, umfasst die Eingangsbaugruppe (30) - wie vorstehend ausgeführt - einen A/D-Wandler, wobei die Ausgangsbaugruppe (4) dann entsprechend einen Digital/Analog-Wandler (D/A-Wandler) umfasst. Dies ist in Figur 4 dargestellt.

Falls der Sensor (S) ein Digitalsensor ist, der digitale Sensorsignale erzeugt, ist ein A/D-Wandler nicht erforderlich.

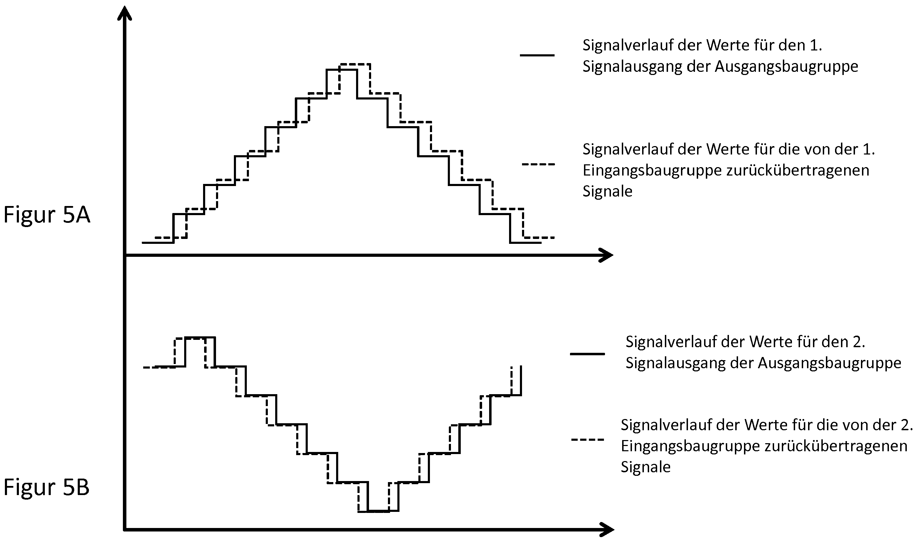

Die von der Steuerung (1) gesendeten Diagnosesignale sind vorteilhafter Weise so bestimmt, dass die Signale am Signalausgang (4A) der Ausgangsbaugruppe (4) einen dynamischen Signalverlauf aufweisen, der zumindest teilweise innerhalb des Bereichs der möglichen Sensorsignalwerte liegt, wobei der dynamische Signalverlauf sich vorzugsweise über den gesamten Bereich der möglichen Sensorsignalwerte erstreckt. In Figur 5A ist beispielsweise ein rampenförmiger Signalverlauf dargestellt. Auf diese Weise werden Testsignale für den gesamten Bereich der möglichen Sensorsignalwerte erzeugt und somit ein fehlersicherer Betrieb für den gesamten Bereich der möglichen Sensorsignalwerte durch die erfindungsgemäße Diagnose überprüft.

Mit einem dynamischen Signalverlauf, bspw. in Form einer Spannungsrampe, lässt sich insbesondere der A/D-Wandler in der Eingangsbaugruppe auf seine Funktionstüchtigkeit überprüfen.

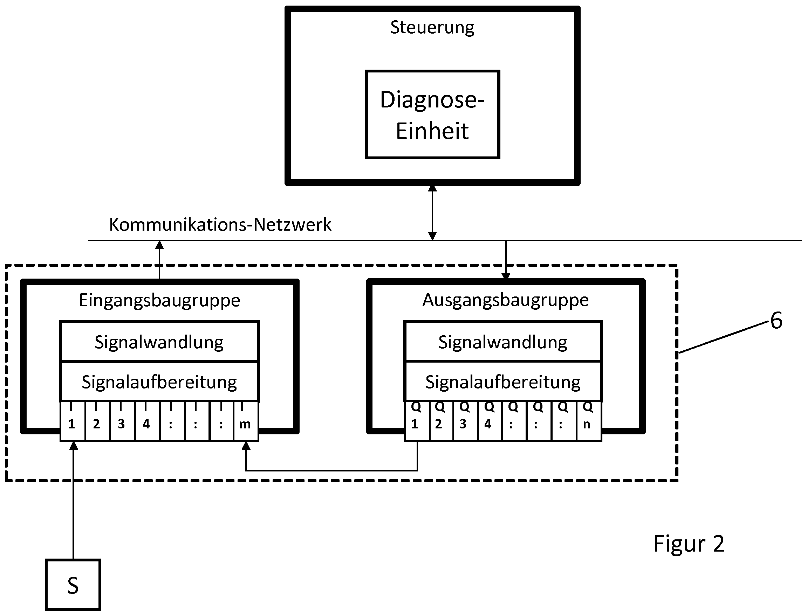

In Figur 2 ist ein Ausführungsbeispiel dargestellt, bei dem die Eingangsbaugruppe (30) und die Ausgangsbaugruppe (4) in einer Baueinheit (6) integriert sind. Dies ist insbesondere aus Platz- und Handhabungsgründen vorteilhaft.

Zur Generierung und zur Auswertung der Diagnosesignale ist vorzugsweise in der Steuerung (1) eine spezielle Diagnoseeinheit vorgesehen.

Für die Steuerung selbst kann eine herkömmliche, d.h. nicht sichere Steuerung, oder auch eine sichere Steuerung, d.h. eine Steuerung, die für die Steuerung sicherheitskritischer Prozesse und Anwendungen spezifiziert bzw. zertifiziert ist, verwendet werden. Vorzugsweise wird eine sichere Steuerung, d.h. eine Sicherheits-Steuerung - wie in Figur 4 dargestellt - eingesetzt, die dann mit dem erfindungsgemäßen Diagnoseverfahren auch unter Verwendung von nicht sicheren Eingangsbaugruppen einen fehlersicheren Betrieb des gesamten Steuerungssystems gewährleistet.

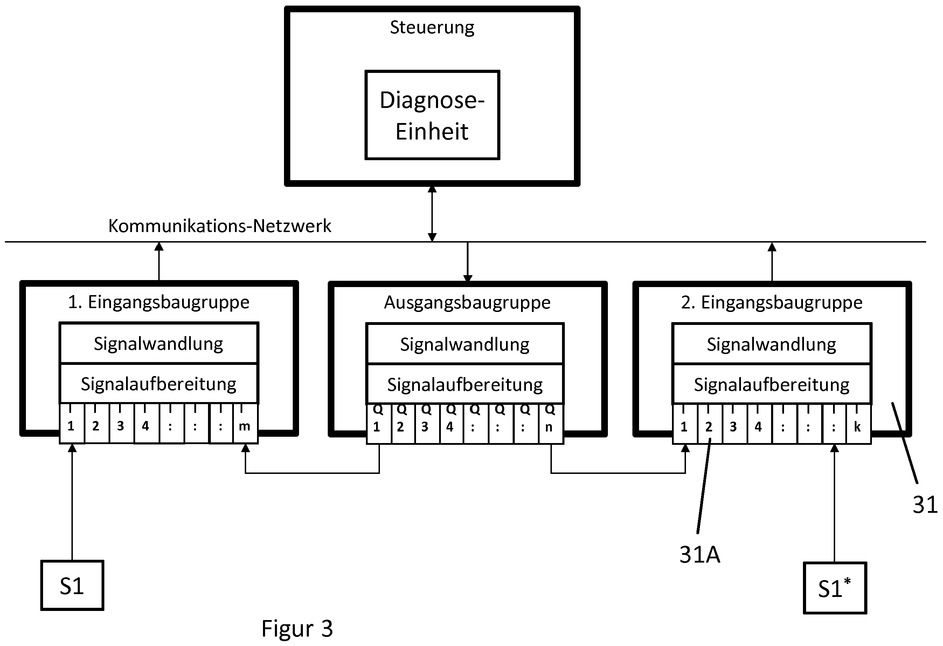

In Figur 3 ist ein Ausführungsbeispiel dargestellt, bei dem eine weitere, zweite Eingangsbaugruppe (31), die eine Anzahl von k Signaleingängen (31A) aufweist, verwendet wird. Dabei ist mit einem ersten Signaleingang (31A) der Eingangsbaugruppe (31) ein weiterer Sensor (S1*) verbunden, während ein weiterer Signalausgang (4A) der Ausgangsbaugruppe (4) mit einem zweiten Signaleingang (31A) der weiteren Eingangsbaugruppe (31) verbunden ist. Die Ausgangsbaugruppe (4) ist auch zur Aufbereitung und/oder Wandlung der über das Kommunikationsnetzwerk empfangenen Diagnosesignale in sensorsignalkonforme Signale zur Ausgabe über den weiteren Signalausgang (4A) an einen zweiten Signaleingang (31A) der weiteren Eingangsbaugruppe (31) ausgebildet. Die Ausgangsbaugruppe (4) ist somit in der Lage, aufbereitete und/oder gewandelte Diagnosesignale an einem ersten Signalausgang und an einem zweiten Signalausgang zur Verfügung zu stellen und entsprechend an zwei Eingangsbaugruppe (30, 31) weiterzuleiten. Dabei ist es vorzugsweise vorgesehen, dass die Steuerung (1) unterschiedliche Diagnosesignale für unterschiedliche Signalausgänge (4A) der Ausgangsbaugruppe (4) sendet, wobei die Zuordnung der unterschiedlichen Diagnosesignale zu den unterschiedlichen Signalausgängen (4A) der Ausgangsbaugruppe (4) jeweils über eine von der Steuerung (1) im Zusammenhang mit den Diagnosesignalen versendete Kennung erfolgt. Auf diese Weise kann anhand der unterschiedlichen Diagnosesignale und der daraufhin von den unterschiedlichen Eingangsbaugruppen (30, 31) zurückübertragenen Signale eine Identifizierung der jeweiligen Eingangsbaugruppe (30, 31) erfolgen. Durch die Identifizierung einer bestimmten Eingangsbaugruppe (30, 31) kann damit auch ein Fehler einer bestimmten Eingangsbaugruppe zugeordnet werden.

Die Fehlersicherheit des Steuerungssystems kann weiter erhöht werden, indem dieselbe Messgröße von beiden Sensoren (S1) und (S1*) redundant erfasst wird. Damit können dann die Signale der beiden Sensoren (S1, S1*) in der Steuerung ausgewertet werden, insbesondere, z.B. durch Vergleich, auf Plausibilität überprüft werden.

So ist es beispielsweise vorgesehen, bei einem Steuerungssystem für eine Windenergieanlage, die Windgeschwindigkeit als Messgröße über zwei voneinander unabhängige Sensoren (Aneometer), die an unterschiedliche Eingangsbaugruppen (30, 31) angeschlossen sind, zu erfassen. Dabei kann es sich um Sensoren handeln, die nach demselben Meßprinzip oder nach unterschiedlichen Meßprinzipien (z.B. ein Flügelrad-Aneometer und ein Ultraschall-Aneometer) arbeiten.

Wenn der fehlersichere Betrieb des Steuerungssystems an sich, d.h. der Eingangsbaugruppen (30, 31), der Ausgangsbaugruppe (4) sowie des Kommunikationsnetzwerkes (2), durch das erfindungsgemäße Diagnoseverfahren überprüft und sichergestellt wurde, so sind stark unterschiedliche, d.h. untereinander unplausible Sensorsignale, der redundanten Sensoren (S1, S1*), ein verlässlicher Hinweis darauf, dass einer der Sensoren (S1, S1*) nicht ordnungsgemäß arbeitet.

Falls die Steuerung (1) anhand des erfindungsgemäßen Diagnoseverfahrens einen Fehler in einer Eingangsbaugruppe (30, 31), der Ausgangsbaugruppe (4) oder im Kommunikationsnetzwerk (2) feststellt, so sind unterschiedliche Fehlerreaktionen vorgesehen. So ist es zum einem vorgesehen, dass der Fehler an eine übergeordnete Steuerung gemeldet wird. Alternativ oder zusätzlich kann die Fehlerreaktion darin bestehen, dass das Steuerungssystem abgeschaltet wird.

Mit dem erfindungsgemäßen Verfahren kann auch die Verfügbarkeit des gesamten Steuerungssystems bei einem Fehler in einer bestimmten, identifizierten Eingangsbaugruppe (30) erhöht werden. In diesem Fall werden nur die von der anderen, intakten Eingangsbaugruppe (31) übertragenen Sensorsignale von der Steuerung (1) verwendet, so dass die Steuerung (1) weiterhin aktiv ist, auch wenn die Redundanz nicht mehr vorhanden ist.

In Figur 4 ist ein weiteres Ausführungsbeispiel eines Steuerungssystems dargestellt. In diesem Ausführungsbeispiel dienen die Signalausgänge (4A) der Ausgangsbaugruppe (4) nicht nur der Diagnose der Eingangsbaugruppen (30, 31). Vielmehr wird über einen Signalausgang (4A) auch ein Aktor (A) angesteuert. Darüber hinaus ist an die erste Eingangsbaugruppe (30) ein zweiter Sensor (S2) angeschlossen, der eine andere Messgröße erfasst als die Sensoren (S1, S1*).

In Figur 5A ist der dynamische, rampen- bzw. treppenförmige Signalverlauf (durchgezogene Linie) der Werte für den 1. Signalausgang der Ausgangsbaugruppe sowie der Signalverlauf (gestrichelte Linie) der Werte für die von der 1. Eingangsbaugruppe zurückübertragenen Werte dargestellt. Sofern die beiden Signalverläufe innerhalb eines vorbestimmten Toleranzbereiches nicht voneinander abweichen, ist ein fehlersicherer Betrieb in Verbindung mit der 1. Eingangsbaugruppe (30) gewährleistet.

In Figur 5B sind die entsprechenden Signalverläufe in Bezug auf die 2. Eingangsbaugruppe (31) dargestellt. Wie zu erkennen ist, sind die Signalverläufe an den beiden Signalausgängen und dem entsprechend die Antwortsignale phasenverschoben, wodurch eine Unterscheidung der Eingangsbaugruppen (30, 31) ermöglicht wird.

## Patentansprüche

1. Verfahren für einen fehlersicheren Betrieb eines netzwerkfähigen Steuerungssystems, wobei ein Steuerungssystems verwendet wird, das
- mindestens eine Steuerung (1),
- mindestens eine Eingangsbaugruppe (30), die über ein Kommunikationsnetzwerk (2) an die Steuerung (1) angeschlossen ist und mindestens einen Signaleingang (30A) aufweist,
- mindestens einen an die Eingangsbaugruppe (30) angeschlossenen Sensor (S, S1), der mit einem ersten Signaleingang (30A) der Eingangsbaugruppe (30) verbunden ist,
- mindestens eine Ausgangsbaugruppe (4), die über das Kommunikationsnetzwerk (2) an die Steuerung (1) angeschlossen ist und mindestens einen Signalausgang (4A) aufweist, umfasst,
- wobei die Eingangsbaugruppe (30) der Aufbereitung und/oder Wandlung der Sensorsignale für eine Datenübertragung über das Kommunikationsnetzwerk (2) an die Steuerung (1) dient,
- wobei die Steuerung (1) Diagnosesignale über das Kommunikationsnetzwerk (2) an die Ausgangsbaugruppe (4) überträgt,
- wobei die von der Ausgangsbaugruppe (4) über das Kommunikationsnetzwerk (2) empfangenen Diagnosesignale über die Eingangsbaugruppe (30) an die Steuerung (1) zurückübertragen werden,
**dadurch gekennzeichnet, dass**
- eine Eingangsbaugruppe (30) verwendet wird, die zwei oder mehr Signaleingänge (30A) aufweist,
- der mindestens eine Signalausgang (4A) der Ausgangsbaugruppe (4) mit einem zweiten Signaleingang (3A) der Eingangsbaugruppe (30) verbunden wird,
- die Ausgangsbaugruppe (4) die über das Kommunikationsnetzwerk (2) empfangenen Diagnosesignale in aufbereiteter und/oder gewandelter Form als Signale, die Sensorsignalen entsprechen oder zumindest ähnlich oder gleichartig zu diesen sind, über den Signalausgang (4A) an den zweiten Signaleingang (30A) der Eingangsbaugruppe (30) ausgibt,
- die von der Ausgangsbaugruppe (4) anhand der Diagnosesignale erzeugten und an die Eingangsbaugruppe (30) ausgegebenen Signale von der Eingangsbaugruppe (30) in wiederum aufbereiteter und/oder gewandelter Form über das Kommunikationsnetzwerk (2) an die Steuerung (1) zurückübertragen werden,
- die Steuerung (1) durch Auswertung der gesendeten Diagnosesignale und der daraufhin von der Eingangsbaugruppe (30) zurückübertragenen Signale Fehler innerhalb der Eingangsbaugruppe (30), der Ausgangsbaugruppe (4) und/oder des Kommunikationsnetzwerkes (2) erkennt.

2. Verfahren nach Anspruch 1,
**dadurch gekennzeichnet, dass**
die von der Steuerung (1) gesendeten Diagnosesignale so bestimmt sind, dass die Signale am Signalausgang (4A) der Ausgangsbaugruppe (4) einen dynamischen Signalverlauf aufweisen, der zumindest teilweise innerhalb des Bereichs der möglichen Sensorsignalwerte liegt.

3. Verfahren nach Anspruch 2,
**dadurch gekennzeichnet, dass**
der dynamische Signalverlauf am Signalausgang (4A) der Ausgangsbaugruppe (4) sich über den gesamten Bereich der möglichen Sensorsignalwerte erstreckt.

4. Verfahren nach einem der vorhergehenden Ansprüche,
**dadurch gekennzeichnet, dass**
als Sensor (S, S1) ein Analogsensorverwendet wird, der analoge Sensorsignale erzeugt,
- wobei die Eingangsbaugruppe (30) einen Analog/Digital-Wandler umfasst,
- wobei die Ausgangsbaugruppe (4) einen Digital/Analog-Wandler umfasst.

5. Verfahren nach einem der Ansprüche 1 bis3,
**dadurch gekennzeichnet, dass**
als Sensor (S, S1) ein Digitalsensor verwendet wird, der digitale Sensorsignale erzeugt.

6. Verfahren nach einem der vorhergehenden Ansprüche,
**dadurch gekennzeichnet, dass**
eine weitere, zweite Eingangsbaugruppe (31), die zwei oder mehr Signaleingänge (31A) aufweist, verwendet wird,
- wobei mit einem ersten Signaleingang (31A) der Eingangsbaugruppe (31) ein weiterer Sensor (S1*) verbunden ist,
- wobei ein weiterer Signalausgang (4A) der Ausgangsbaugruppe (4) mit einem zweiten Signaleingang (31A) der weiteren Eingangsbaugruppe (31) verbunden ist,
- wobei die Ausgangsbaugruppe (4) zur Aufbereitung und/oder Wandlung der über das Kommunikationsnetzwerk empfangenen Diagnosesignale in sensorsignalkonforme Signale zur Ausgabe über den weiteren Signalausgang (4A) an einen zweiten Signaleingang (31A) der weiteren Eingangsbaugruppe (31) ausgebildet ist.

7. Verfahren nach Anspruch 6,
**dadurch gekennzeichnet, dass**
die Steuerung (1) unterschiedliche Diagnosesignale für unterschiedliche Signalausgänge (4A) der Ausgangsbaugruppe (4) sendet.

8. Verfahren nach Anspruch 7,
**dadurch gekennzeichnet, dass**
die Zuordnung der unterschiedlichen Diagnosesignale zu den unterschiedlichen Signalausgängen (4A) der Ausgangsbaugruppe (4) jeweils über eine von der Steuerung (1) im Zusammenhang mit den Diagnosesignalen versendete Kennung erfolgt.

9. Verfahren nach einem der Ansprüche 6 bis 8,
**dadurch gekennzeichnet, dass**
die von der Steuerung (1) gesendeten Diagnosesignale für die unterschiedlichen Signalausgänge (4A) der Ausgangsbaugruppe so bestimmt sind, dass
- die Signale an den Signalausgängen (4A) der Ausgangsbaugruppe (4) jeweils einen dynamischen Signalverlauf aufweisen,
- die Signalverläufe an den beiden Signalausgängen (4A) phasenverschoben sind.

10. Verfahren nach einem der Ansprüche 6 bis 9,
**dadurch gekennzeichnet, dass**
anhand der unterschiedlichen Diagnosesignale und der daraufhin von den unterschiedlichen Eingangsbaugruppen (30, 31) zurückübertragenen Signale eine Identifizierung der jeweiligen Eingangsbaugruppe (30, 31) erfolgt.

11. Verfahren nach einem der Ansprüche 6 bis 10,
**dadurch gekennzeichnet, dass**
über den mit der ersten Eingangsbaugruppe (3) verbundenen Sensor (S1) und über den mit der zweiten Eingangsbaugruppe (31) verbundenen Sensor (S1*) jeweils dieselbe Messgröße redundant erfasst wird.

12. Verfahren nach einem der Ansprüche 6 bis 11,
**dadurch gekennzeichnet, dass**
die Signale der beiden Sensoren (S1, S1*) in der Steuerung ausgewertet werden, insbesondere auf Plausibilität überprüft werden.

13. Verfahren nach einem der vorherstehenden Ansprüche,
**dadurch gekennzeichnet, dass**
die Steuerung (1) bei Erkennung eines Fehlers eine entsprechende Fehlerreaktion auslöst.

14. Verfahren nach Anspruch 13,
**dadurch gekennzeichnet, dass**
die Fehlerreaktion in einem Abschalten des Steuerungssystems besteht.

15. Verfahren nach einem der Ansprüche 13 oder 14,
**dadurch gekennzeichnet, dass**
die Fehlerreaktion bei Erkennung eines Fehlers in einer Eingangsbaugruppe (30) darin besteht, dass nur noch die von der anderen Eingangsbaugruppe (31) übertragenen Sensorsignale von der Steuerung (1) verwendet werden.

16. Verfahren nach einem der vorstehenden Ansprüche,
**dadurch gekennzeichnet, dass**
als Steuerung (1) eine sichere Steuerung verwendet wird.

## Claims

1. Method for failsafe operation of a network-enabled control system, wherein use is made of a control system which comprises
- at least one controller (1),
- at least one input assembly (30) which is connected to the controller (1) via a communication network (2) and has at least one signal input (30A),
- at least one sensor (S, S1) which is connected to the input assembly (30) and is connected to a first signal input (30A) of the input assembly (30),
- at least one output assembly (4) which is connected to the controller (1) via the communication network (2) and has at least one signal output (4A),
- wherein the input assembly (30) is used to condition and/or convert the sensor signals for transmitting data to the controller (1) via the communication network (2),
- wherein the controller (1) transmits diagnostic signals to the output assembly (4) via the communication network (2),
- wherein the diagnostic signals received by the output assembly (4) via the communication network (2) are transmitted back to the controller (1) via the input assembly (30), **characterized in that**
- use is made of an input assembly (30) having two or more signal inputs (30A),
- the at least one signal output (4A) of the output assembly (4) is connected to a second signal input (3A) of the input assembly (30),
- the output assembly (4) outputs the diagnostic signals received via the communication network (2) in conditioned and/or converted form, as signals which correspond to sensor signals or are at least similar or identical to the latter, to the second signal input (30A) of the input assembly (30) via the signal output (4A),
- the signals generated by the output assembly (4) on the basis of the diagnostic signals and output to the input assembly (30) are transmitted back from the input assembly (30) to the controller (1) again in conditioned and/or converted form via the communication network (2),
- the controller (1) detects errors inside the input assembly (30), the output assembly (4) and/or the communication network (2) by evaluating the transmitted diagnostic signals and the signals then transmitted back from the input assembly (30).

2. Method according to Claim 1,
**characterized in that**
the diagnostic signals transmitted by the controller (1) are determined in such a manner that the signals at the signal output (4A) of the output assembly (4) have a dynamic signal profile which is at least partially within the range of possible sensor signal values.

3. Method according to Claim 2,
**characterized in that**
the dynamic signal profile at the signal output (4A) of the output assembly (4) extends over the entire range of possible sensor signal values.

4. Method according to one of the preceding claims, **characterized in that**
an analogue sensor which generates analogue sensor signals is used as the sensor (S, S1),
- wherein the input assembly (30) comprises an analogue/digital converter,
- wherein the output assembly (4) comprises a digital/analogue converter.

5. Method according to one of Claims 1 to 3, **characterized in that**
a digital sensor which generates digital sensor signals is used as the sensor (S, S1).

6. Method according to one of the preceding claims, **characterized in that**
a further, second input assembly (31) having two or more signal inputs (31A) is used,
- wherein a further sensor (S1*) is connected to a first signal input (31A) of the input assembly (31),
- wherein a further signal output (4A) of the output assembly (4) is connected to a second signal input (31A) of the further input assembly (31),
- wherein the output assembly (4) is designed to condition and/or convert the diagnostic signals received via the communication network into signals conforming to sensor signals for output to a second signal input (31A) of the further input assembly (31) via the further signal output (4A).

7. Method according to Claim 6,
**characterized in that**
the controller (1) transmits different diagnostic signals for different signal outputs (4A) of the output assembly (4).

8. Method according to Claim 7,
**characterized in that**
the different diagnostic signals are each assigned to the different signal outputs (4A) of the output assembly (4) using an identifier which is transmitted by the controller (1) in connection with the diagnostic signals.

9. Method according to one of Claims 6 to 8, **characterized in that**
the diagnostic signals transmitted by the controller (1) for the different signal outputs (4A) of the output assembly are determined in such a manner that
- the signals at the signal outputs (4A) of the output assembly (4) each have a dynamic signal profile,
- the signal profiles at the two signal outputs (4A) are phase-shifted.

10. Method according to one of Claims 6 to 9, **characterized in that**
the respective input assembly (30, 31) is identified on the basis of the different diagnostic signals and the signals then transmitted back from the different input assemblies (30, 31).

11. Method according to one of Claims 6 to 10, **characterized in that**
the same measurement variable is respectively redundantly captured via the sensor (S1) connected to the first input assembly (3) and via the sensor (S1*) connected to the second input assembly (31).

12. Method according to one of Claims 6 to 11, **characterized in that**
the signals from the two sensors (S1, S1*) are evaluated in the controller, in particular are checked for plausibility.

13. Method according to one of the preceding claims, **characterized in that**
the controller (1) triggers a corresponding error response if an error is detected.

14. Method according to Claim 13,
**characterized in that**
the error response involves disconnecting the control system.

15. Method according to either of Claims 13 and 14, **characterized in that**
if an error is detected in an input assembly (30), the error response involves the controller (1) using only the sensor signals transmitted by the other input assembly (31).

16. Method according to one of the preceding claims, **characterized in that**
a safe controller is used as the controller (1).

## Revendications

1. Procédé pour le fonctionnement à sécurité intégrée d'un système de commande compatible avec les réseaux, dans lequel on utilise un système de commande qui comprend :
- au moins une unité de commande (1),
- au moins un module d'entrée (30) qui est relié à l'unité de commande (1) par l'intermédiaire d'un réseau de communication (2) et qui comporte au moins une entrée de signal (30A),
- au moins un capteur (S, S1) connecté au module d'entrée (30) et connecté à une première entrée de signal (30A) du module d'entrée (30),
- au moins un module de sortie (4) qui est relié à l'unité de commande (1) par l'intermédiaire du réseau de communication (2) et qui comporte au moins une sortie de signal (4A),
- dans lequel le module d'entrée (30) est utilisé pour traiter et/ou convertir les signaux de capteur pour une transmission de données par l'intermédiaire du réseau de communication (2) à l'unité de commande (1),
- dans lequel l'unité de commande (1) transmet des signaux de diagnostic par l'intermédiaire du réseau de communication (2) au module de sortie (4),
- dans lequel les signaux de diagnostic reçus du module de sortie (4) par l'intermédiaire du réseau de communication (2) sont renvoyés à l'unité de commande (1) par l'intermédiaire du module d'entrée (30), **caractérisé**
- **en ce qu'**on utilise un module d'entrée (30) qui comporte deux entrées de signal (30A) ou plus,
- **en ce que** l'au moins une sortie de signal (4A) du module de sortie (4) est connectée à une seconde entrée de signal (3A) du module d'entrée (30),
- le module de sortie (4) délivre les signaux de diagnostic reçus par l'intermédiaire du réseau de communication (2) sous forme traitée et/ou convertie en tant que signaux correspondant ou au moins similaires à des signaux de capteur, à la seconde entrée de signal (30A) du module d'entrée (30) par l'intermédiaire de la sortie de signal (4A),
- les signaux générés par le module de sortie (4) sur la base des signaux de diagnostic et délivrés au module d'entrée (30) sont renvoyés sous une forme traitée et/ou convertie par le module d'entrée (30) à l'unité de commande (1) par l'intermédiaire du réseau de communication (2),
- l'unité de commande (1) détecte des erreurs dans le module d'entrée (30), le module de sortie (4) et/ou le réseau de communication (2) en évaluant les signaux de diagnostic transmis et les signaux renvoyés ensuite par le module d'entrée (30).

2. Procédé selon la revendication 1,
**caractérisé en ce que** les signaux de diagnostic transmis par le contrôleur (1) sont déterminés de manière à ce que les signaux à la sortie de signal (4A) du module de sortie (4) présentent une forme d'onde de signal dynamique qui se situe au moins partiellement dans la plage des valeurs possibles du signal du capteur.

3. Procédé selon la revendication 2,
**caractérisé en ce que** la forme d'onde de signal dynamique à la sortie de signal (4A) du module de sortie (4) s'étend sur toute la plage des valeurs possibles du signal de capteur.

4. Procédé selon l'une des revendications précédentes,
**caractérisé en ce qu'**un capteur analogique est utilisé en tant que capteur (S, S1) qui génère des signaux de capteur analogiques,
- dans lequel le module d'entrée (30) comprend un convertisseur analogique/numérique,
- dans lequel le module de sortie (4) comprend un convertisseur numérique/analogique.

5. Procédé selon l'une des revendications 1 à 3, **caractérisé en ce qu'**un capteur numérique est utilisé en tant que capteur (S, S1) qui génère des signaux de capteur numériques.

6. Procédé selon l'une des revendications précédentes,
**caractérisé en ce qu'**un autre second module d'entrée (31) comportant deux entrées de signal (31A) ou plus est utilisé,
- dans lequel un autre capteur (S1*) est connecté à une première entrée de signal (31A) du module d'entrée (31),
- dans lequel une autre sortie de signal (4A) du module de sortie (4) est connectée à une seconde entrée de signal (31A) du module d'entrée supplémentaire (31),
- dans lequel le module de sortie (4) est conçu pour traiter et/ou convertir les signaux de diagnostic reçus par l'intermédiaire du réseau de communication en signaux conformes au signal de capteur pour les délivrer par l'intermédiaire de l'autre sortie de signal (4A) à une seconde entrée de signal (31A) de l'autre module d'entrée (31).

7. Procédé selon la revendication 6,
**caractérisé en ce que** l'unité de commande (1) transmet différents signaux de diagnostic pour différentes sorties de signaux (4A) du module de sortie (4).

8. Procédé selon la revendication 7,
**caractérisé en ce que** l'affectation des différents signaux de diagnostic aux différentes sorties de signaux (4A) du module de sortie (4) est respectivement effectuée par l'intermédiaire d'un identificateur envoyé par l'unité de commande (1) en association avec les signaux de diagnostic.

9. Procédé selon l'une des revendications 6 à 8, **caractérisé en ce que** les signaux de diagnostic envoyés par l'unité de commande (1) pour les différentes sorties de signaux (4A) du module de sortie sont déterminés de manière à ce que
- les signaux aux sorties de signal (4A) du module de sortie (4) présentent respectivement une forme d'onde de signal dynamique,
- les formes d'onde de signaux aux deux sorties de signal (4A) sont déphasées.

10. Procédé selon l'une des revendications 6 à 9, **caractérisé en ce qu'**une identification du module d'entrée respectif (30, 31) est effectuée sur la base des différents signaux de diagnostic et des signaux renvoyés ensuite par les différents modules d'entrée (30, 31).

11. Procédé selon l'une des revendications 6 à 10, **caractérisé en ce que** la même grandeur de mesure est détectée de manière redondante par l'intermédiaire du capteur (S1) connecté au premier module d'entrée (3) et par l'intermédiaire du capteur (S1*) connecté au second module d'entrée (31).

12. Procédé selon l'une des revendications 6 à 11, **caractérisé en ce que** les signaux des deux capteurs (S1, S1*) sont évalués dans le système de commande, en particulier pour en vérifier la plausibilité.

13. Procédé selon l'une des revendications précédentes,
**caractérisé en ce que** l'unité de commande (1) déclenche une réponse d'erreur correspondante lors de la détection d'une erreur.

14. Procédé selon la revendication 13,
**caractérisé en ce que** la réponse d'erreur consiste à éteindre le système de commande.

15. Procédé selon l'une des revendications 13 ou 14, **caractérisé en ce que** la réponse d'erreur lors de la détection d'une erreur dans un module d'entrée (30) consiste **en ce que** seuls les signaux de capteur transmis par l'autre module d'entrée (31) sont utilisés par l'unité de commande (1).

16. Procédé selon l'une des revendications précédentes, **caractérisé en ce qu'**une unité de commande sécurisée est utilisée en tant qu'unité de commande (1) .
